Europäisches Patentamt

**European Patent Office**

Office européen des brevets

(19)

(11) Numéro de publication : **0 053 785**
**B1**

(12) FASCICULE DE BREVET EUROPÉEN

(45) Date de publication du fascicule du brevet :
09.10.85

(21) Numéro de dépôt : **81110033.8**

(22) Date de dépôt : **01.12.81**

(51) Int. Cl.⁴ : **H 01 M 10/36, H 01 M 6/14**

(54) Générateur électrochimique à électrode négative liquide.

(30) Priorité : 05.12.80 FR 8025855

(43) Date de publication de la demande :
16.06.82 Bulletin 82/24

(45) Mention de la délivrance du brevet :
09.10.85 Bulletin 85/41

(84) Etats contractants désignés :
**AT BE CH DE FR GB IT LI LU NL SE**

(56) Documents cités :
EP-A- 0 053 889
FR-A- 1 286 618
FR-A- 2 343 337
GB-A- 2 030 353
US-A- 2 937 219
US-A- 3 408 229
US-A- 3 943 001
**Le dossier contient des informations techniques présentées postérieurement au dépôt de la demande et
ne figurant pas dans le présent fascicule.**

(73) Titulaire : **COMPAGNIE GENERALE D'ELECTRICITE**
Société anonyme dite:
**54, rue La Boétie**
**F-75382 Paris Cedex 08 (FR)**

(72) Inventeur : **Bernard, Lionel**
**Rés Les Jardins de Boulogne F7D rue de Boulogne**
**F-59000 Lille (FR)**
Inventeur : **Lelieur, Jean-Pierre**
**25, Allée Mireille**
**F-59130 Lambersart (FR)**
Inventeur : **Le Mehaute, Alain**
**69, rue Juliette Adam**
**F-91190 Gif Sur Yvette (FR)**

(74) Mandataire : **Weinmiller, Jürgen et al**
**Zeppelinstrasse 63**
**D-8000 München 80 (DE)**

Jouve, 18, rue St-Denis, 75001 Paris, France

**Description**

La présente invention concerne un générateur électrochimique secondaire dont l'électrode négative se présente à l'état liquide.

Il est connu par le document US-A 3 408 229 de réaliser un générateur comprenant une électrode négative à base d'un métal alcalin ou alcalino terreux, par exemple à base de lithium, en solution dans l'ammoniac, l'électrode positive comprenant une solution de soufre dans l'ammoniac ainsi que des thiocyanates, une fine membrane, essentiellement à base de Cellophane®, séparant lesdites électrodes négative et positive. Un générateur similaire est décrit dans la demande de brevet européen EP-A-0053 889, dont la date de priorité est antérieure, mais la date de publication postérieure à la date de priorité de la présente demande.

Toutefois, le générateur décrit dans ces documents a les inconvénients suivants :

D'une part, les membranes à base de Cellophane ne sont pas assez stables dans le milieu proposé, à savoir par exemple $Li(NH_3)_4$.

Par ailleurs, au niveau de l'électrode positive de soufre, les thiocyanates ne sont pas stables et se décomposent pour donner des cyanures.

De plus, et surtout, la solution cathodique comportant du soufre et mouillant le séparateur, peut diffuser à travers celui-ci et se mélanger à la masse anodique, mettant l'élément en court-circuit. Ceci résulte du fait que la Cellophane® ne constitue pas le meilleur barrage pour le soufre dissous en solution ammoniacale, ainsi que pour le lithium en solution ammoniacale.

La présente invention telle qu'elle est caractérisée dans les revendications permet notamment de réduire ces inconvénients.

L'invention sera décrite ci-après plus en détail à l'aide de plusieurs exemples de réalisation et en référence aux dessins annexés dans lesquels :

La figure 1 représente très schématiquement la structure d'un générateur expérimental selon l'invention.

La figure 2 représente également très schématiquement la structure d'une variante d'un générateur expérimental selon l'invention.

Les figures 3 à 7 représentent les performances de générateurs selon l'invention.

La figure 8 représente un mode de réalisation pratique d'un générateur selon l'invention.

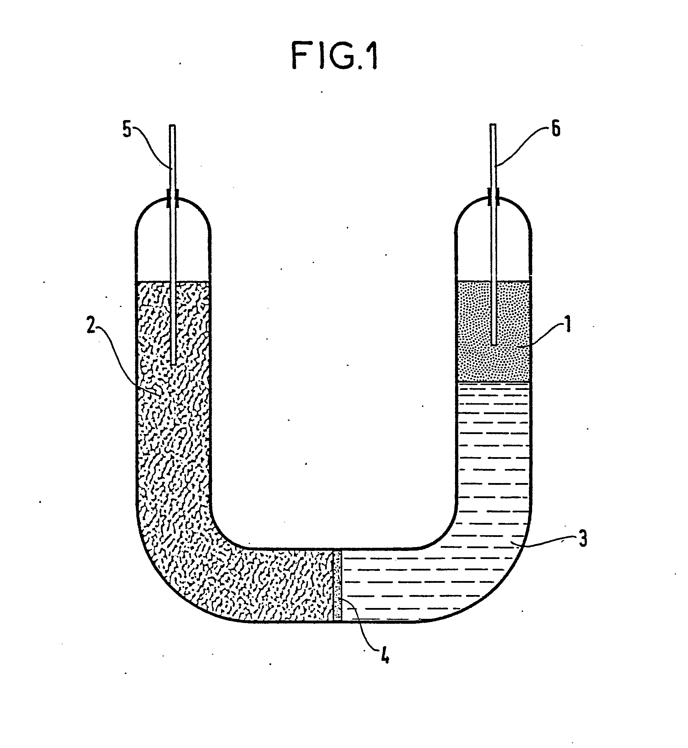

Sur la figure 1 la référence 1 désigne l'électrode négative formée par une solution d'un métal alcalin, tel que le sodium, le potassium, le lithium, ou un métal alcalino-terreux, tel que le calcium, dans l'ammoniac liquide.

L'électrode positive 2 est séparée de l'électrode négative 1 par un électrolyte 3 comprenant une solution dans l'ammoniac liquide d'un iodure d'un métal alcalin ou alcalino terreux, tel que LiI, NaI, KI ou $CaI_2$, donc en démixion ou séparation de phases avec l'électrode négative 1. Un séparateur 4 est disposé entre l'électrode 2 et l'électrolyte 3. Les références 5 et 6 désignent les bornes de sortie.

L'électrode positive 2 est constituée d'une solution d'un chalcogène tel que le soufre, ou d'un polysulfure dans l'ammoniac liquide. Cette solution imprègne un feutre de graphite.

L'électrode 2 peut être également consituée d'une suspension ou d'une émulsion dans l'ammoniac d'un composé pouvant intercaler le métal de l'électrode négative, tel que $Li_xNiPS_3$, $LiFeS_2$, $Li_xTiS_2$.

Avantageusement, dans le cas où l'électrode positive est formée par une solution, le séparateur 4 est une membrane échangeuse de cations. Le séparateur peut être formé par une membrane non sélective et poreuse dans le cas des composés d'intercalation tels que mentionnés ci-dessus.

Un tel générateur fonctionne depuis − 70 °C jusqu'à 50 °C (sous pression).

Les avantages d'un tel générateur sont les suivants :

L'électrode négative présente une excellente réversibilité d'où la possibilité d'effectuer un grand nombre de cycles charge-décharge présentant des polarisations limitées, à basses températures.

L'électrode positive, qui peut être une électrode de soufre associée à un échangeur de cation sélectif, présente une grande réversibilité.

L'utilisation, pour constituer l'électrode positive, des composés d'intercalation des métaux de l'électrode négative, autorise également une bonne rechargeabilité.

Le principe de fonctionnement d'un tel générateur est le suivant : Si l'électrode négative est formée par un métal alcalin A en solution dans l'ammoniac liquide, on a les réactions suivantes :

$$A \rightleftarrows A^+ + e^-$$

$A^+$ en solution traverse l'échangeur séparateur.

Dans le cas du soufre comme matière positive on a la réaction :

$$S_{(n)} + 2e^- + 2A^+ \rightleftarrows (A_2S_{(n)})$$

en solution dans l'ammoniac

Dans le cas d'un composé d'intercalation Z on a :

$$xA^+ + Z + xe^- \rightleftarrows (A_xZ) \text{ monophasé}$$

2

Un tel générateur peut être rechargé.

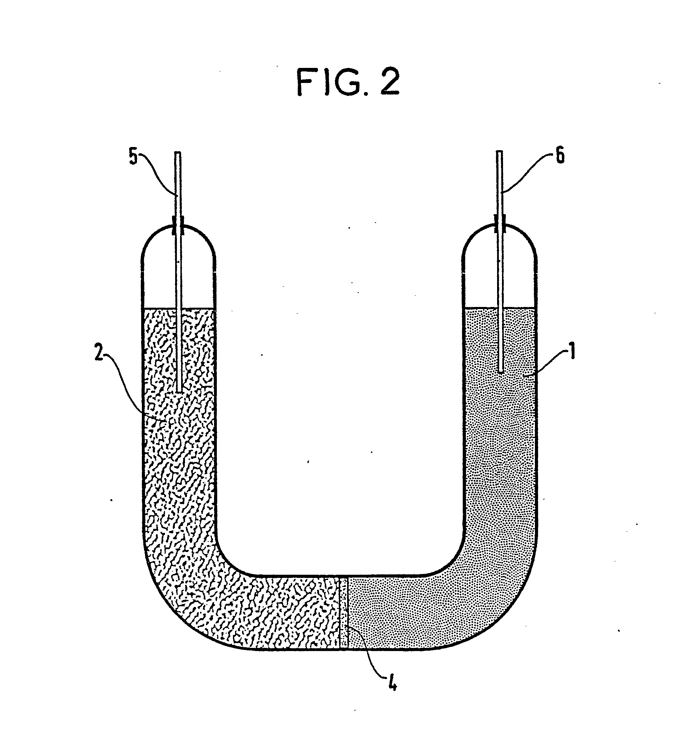

Dans la variante illustrée à la figure 2, correspondant plus particulièrement au cas où l'électrode positive est formée par une solution de soufre dans l'ammoniac, les électrodes 1 et 2 sont séparées uniquement par l'intermédiaire d'une membrane échangeuse 4 du type cationique, imprégnée d'électrolyte formé d'une solution d'iodure d'un métal alcalin ou alcalino-terreux, tel que LiI, NaI, KI, CaI$_2$ dans l'ammoniac liquide, comme dans le cas précédent.

Un tel générateur fonctionne également depuis − 70 °C jusqu'à 50 °C et cela sous pression.

A titre d'exemple la constitution d'un générateur, tel que représenté à la figure 1, peut être la suivante :

L'électrode négative peut comprendre du potassium dissous dans de l'ammoniac liquide. L'électrolyte est une solution saturée d'iodure de potassium dans l'ammoniac liquide, l'électrode positive est formée par du soufre dissout à température ambiante et sous pression dans l'ammoniac liquide. Le séparateur est une membrane échangeuse de cations de 7 mm$^2$ de surface du type P2291 vendue sous la marque « Permion »® par la Société RAI. Les collecteurs de courant sont en tungstène.

Un tel générateur présente une tension à vide de l'ordre de 2,3 volts.

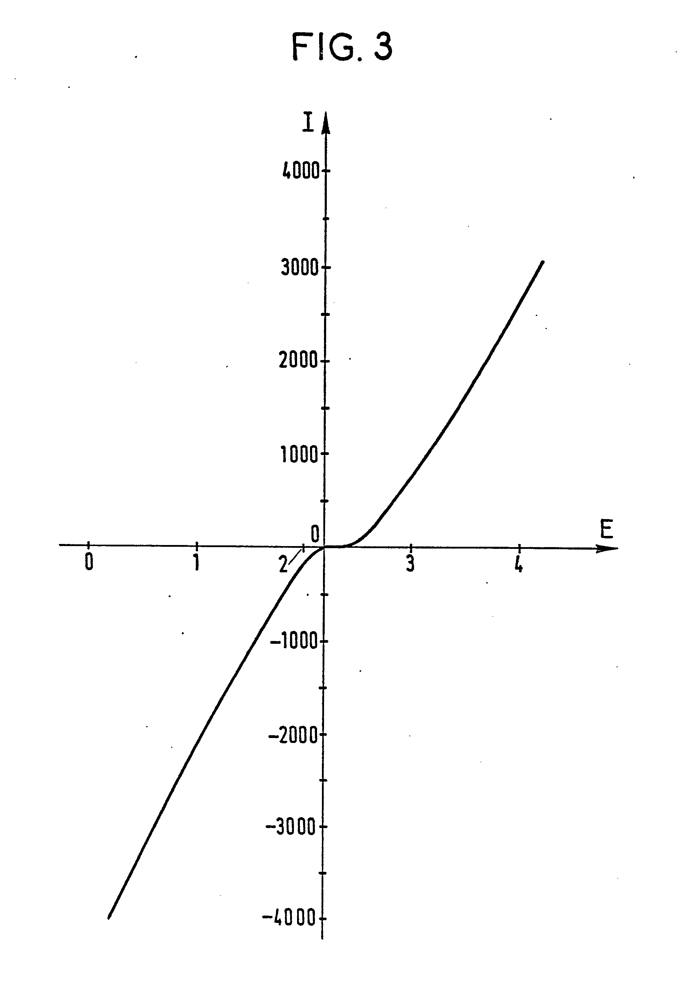

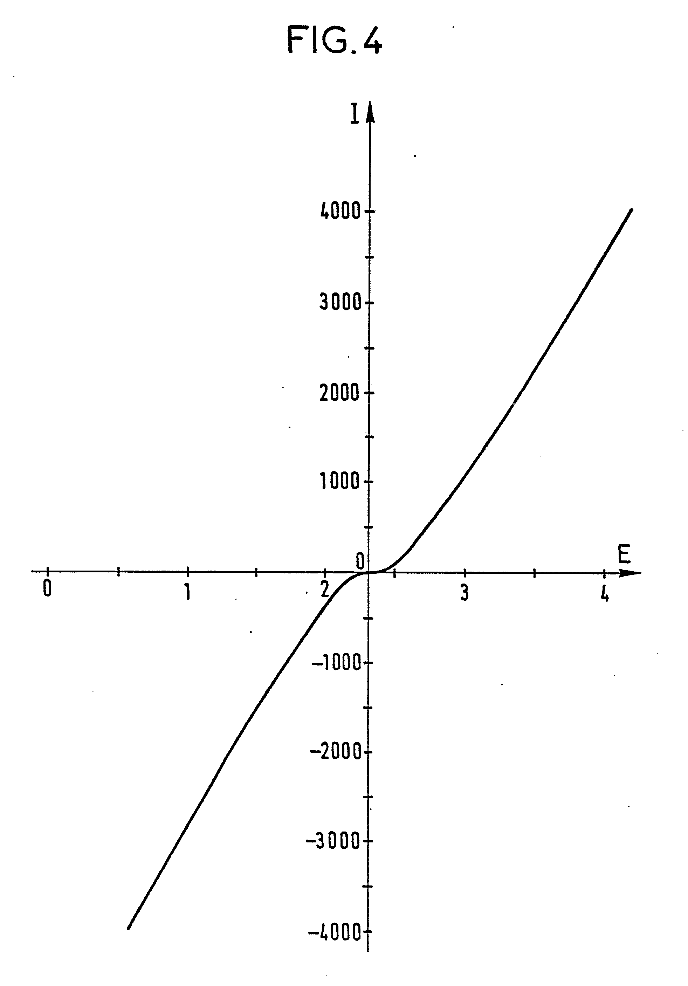

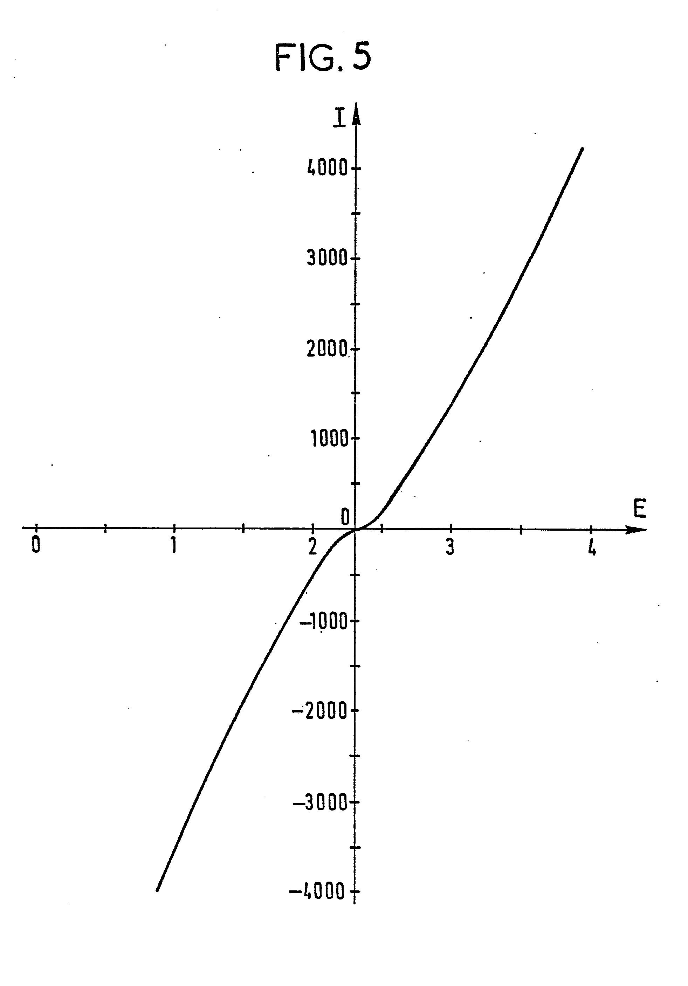

Les figures 3 à 7 illustrent les caractéristiques (tension E en abscisses en volts, intensité I en ordonnées en microampères) d'un tel générateur et cela à des températures de − 40 °C (figure 3) − 18 °C (figure 4) et − 2,5 °C (figure 5).

La capacité du générateur est de l'ordre de 1 Ah, l'électrode positive étant constituée de 5 %, en moles, de soufre dans l'ammoniac liquide.

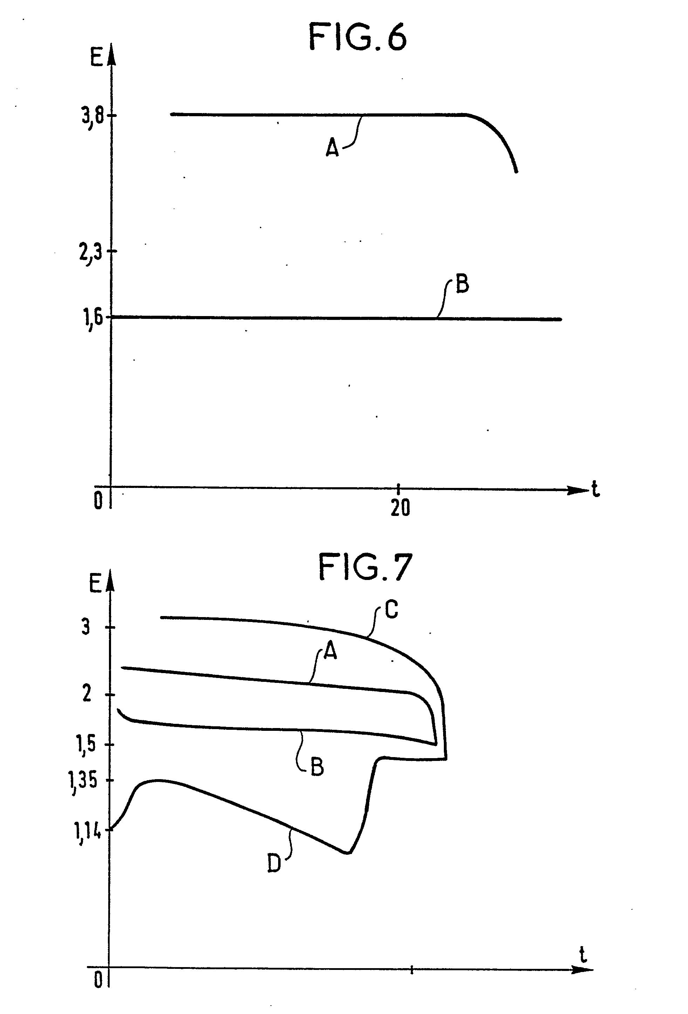

La figure 6 illustre la variation de la tension E en volts en fonction du temps, en heures, et cela en charge (courbe A), en décharge (courbe B) respectivement sous des intensités de 13,5 et 8,4 mA/cm$^2$ à partir de l'état initial à − 40 °C.

On constate l'excellente stabilité des caractéristiques.

La figure 7 illustre les caractéristiques charge-décharge en fonction du temps à une température de − 40 °C pour un générateur dont l'électrode positive ne comporte pas de feutre de graphite (courbes C et D) et dans le cas où elle en comporte (courbes A et B). On voit donc qu'il est souhaitable d'utiliser un tel feutre.

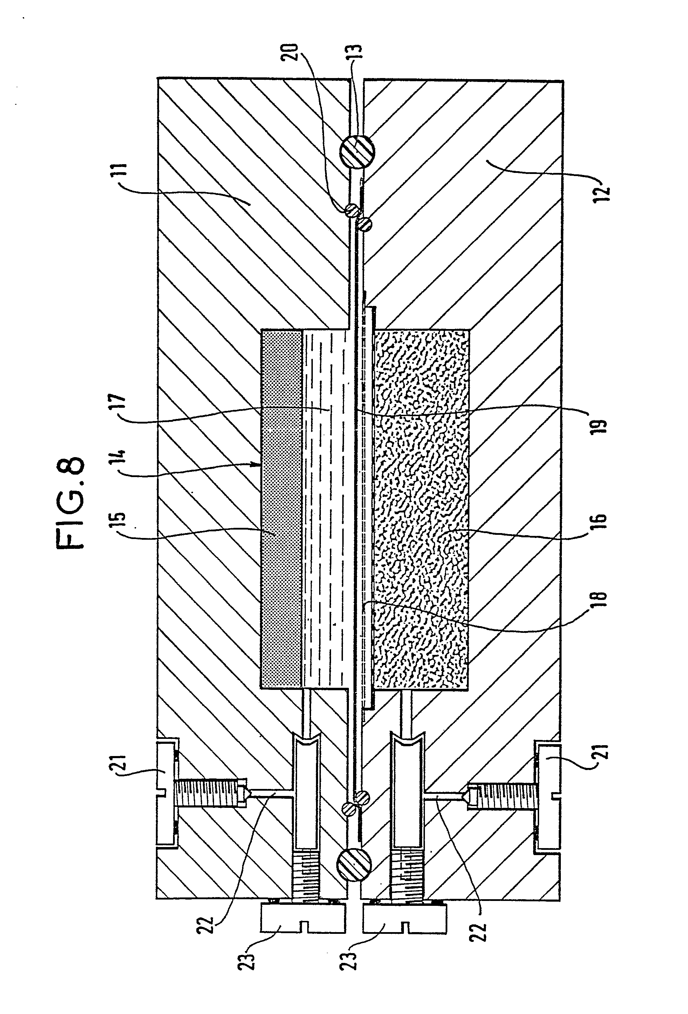

La figure 8 illustre un exemple d'un mode de réalisation pratique d'un générateur selon l'invention.

Il comprend deux plaques 11 et 12 circulaires, en acier inoxydable, posées l'une sur l'autre et jointes de façon étanche au moyen d'un joint torique 13 en silicone.

Les plaques délimitent une cavité interne 14 dans laquelle se trouvent disposées l'électrode négative 15, l'électrode positive 16 et l'électrolyte 17.

La référence 18 désigne une grille destinée à maintenir la membrane séparatrice 19 ; des joints toriques tels que 20 assurent l'étanchéité et permettent de limiter la membrane en deça du joint 13.

Les références 21 désignent des bouchons obturant des canalisations de remplissage 22, des robinets 23 étant par ailleurs prévus au niveau desdites canalisations.

Il est possible de réaliser un générateur présentant une structure semblable à celle de la figure 8 dans lequel l'électrode négative est constituée d'une solution de potassium dans l'ammoniac, représentée par la formule K(NH$_3$)$_4$, démixée par rapport à une solution de KI dans l'ammoniac, constituant l'électrolyte.

L'électrode positive est constituée par une suspension de NiPS$_3$ dans l'ammoniac. La membrane séparatrice, non sélective, peut être formée d'un feutre de polyéthylène.

Un tel générateur présente une auto décharge lente n'affectant pas le comportement électrochimique puisque les électrodes peuvent être rechargées. Il présente une tension d'équilibre comprise entre 1,5 V et 2,2 V et accepte des densités de courant supérieures à 5 milliampères/cm$^2$ avec des polarisations inférieures à 1V, tant en charge qu'en décharge.

A titre d'exemple, la constitution d'un générateur tel que représentée à la figure 2 peut être la suivante.

L'électrode négative comprend du potassium dissous dans l'ammoniac liquide.

L'électrode positive comporte 20 % en moles, de soufre également dissout à température ambiante et sous pression dans l'ammoniac liquide.

Ces électrodes sont séparées par l'intermédiaire d'une membrane cationique de 7 mm$^2$ de surface du type LDE. P2291 précité. Elle est imprégnée de KI dissous dans l'ammoniac liquide. Sa résistance est de 600 ohms à − 40 °C environ.

Un tel générateur présente une tension à vide de l'ordre de 2,3 volt, et une capacité de l'ordre de 1 Ah, et ses caractéristiques sont sensiblement celles précédemment représentées aux figures 3 à 7.

L'invention trouve des applications avantageuses dans le domaine des générateurs de haute puissance réversibles fonctionnant à basse température.

Bien entendu l'invention n'est nullement limitée aux modes de réalisation décrits et représentés mais elle en couvre au contraire toutes les variantes.

## Revendications

1. Générateur électrochimique comportant une électrode négative (1) comprenant un métal alcalin ou alcalino-terreux dissous dans l'ammoniac liquide, un électrolyte (3), une électrode positive (2) comprenant une solution dans l'ammoniac d'un chalcogène ou d'un chalcogénure, et un séparateur (4), caractérisé par le fait que ledit séparateur (4) est constitué par une membrane échangeuse de cations, ledit électrolyte (3) comprenant une solution d'un iodure d'un métal alcalin ou alcalino-terreux et étant localisé au sein de ladite membrane.

2. Générateur électrochimique comportant une électrode négative (1) comprenant un métal alcalin ou alcalino-terreux dissous dans l'ammoniac liquide, un électrolyte (3), une électrode positive (2) comprenant une solution dans l'ammoniac d'un chalcogène ou d'un chalcogénure, et un séparateur (4), caractérisé par le fait que ledit séparateur (4) est constitué par une membrane échangeuse de cations, ledit électrolyte (3) comprenant une solution d'un iodure d'un métal alcalin ou alcalino-terreux et étant disposé entre ladite électrode négative (1) et le séparateur (3).

3. Générateur selon l'une des revendications 1 et 2, caractérisé par le fait que le chalcogène est le soufre.

4. Générateur selon l'une des revendications 1 et 2, caractérisé par le fait que ledit chalcogène est choisi parmi les chalcogénures alcalins, alcalino-terreux ou d'ammonium.

5. Générateur électrochimique comportant une électrode négative (1) comprenant un métal alcalin ou alcalino-terreux dissous dans l'ammoniac liquide, un électrolyte (3), une électrode positive (2) et un séparateur (4), caractérisé par le fait que l'électrode positive (2) comprend une suspension dans l'ammoniac d'au moins un composé solide apte à intercaler le métal de l'électrode négative (1), ledit électrolyte (3) comprenant une solution d'un iodure d'un métal alcalin ou alcalino-terreux.

6. Générateur selon la revendication 5, caractérisée par le fait que ledit composé solide est choisi parmi $Li_xNiPS_3$, $Li_xFeS_2$, $Li_xTiS_2$.

7. Générateur selon l'une des revendications 5 et 6, caractérisé par le fait que le séparateur (4) est une membrane non sélective.

8. Générateur selon l'une des revendications 5 à 7, caractérisé par le fait que l'électrolyte (3) est disposé entre ladite électrode négative (1) et ledit séparateur (4).

9. Générateur selon l'une des revendications 1 à 8, caractérisé par le fait que ledit métal alcalin est choisi parmi le sodium, le potassium et le lithium, ledit métal alcalino-terreux étant de préférence le calcium.

## Claims

1. An electrochemical generator including a negative electrode (1) comprising an alkali or alkali-earth metal dissolved in liquid ammonia, an electrolyte (3), a positive electrode (2) comprising a solution in ammonia of chalcogen or chalcogenide, and a separator (4), characterized in that said separator (4) is constituted by a cation-exchanging membrane, said electrolyte (3) comprising a solution of a iodide of an alkali or alkali-earth metal and being located within said membrane.

2. An electrochemical generator including a negative electrode (1) comprising an alkali or alkali-earth metal dissolved in liquid ammonia, an electrolyte (3), a positive electrode (2) comprising a solution in ammonia of chalcogen or chalcogenide, and a separator (4), characterized in that said separator (4) is constituted by a cation-exchanging membrane, said electrolyte (3) comprising a solution of a iodide of an alkali or alkali-earth metal and being located between said negative electrode (1) and the separator (4).

3. A generator according to one of claims 1 and 2, characterized in that the chalcogen is sulphur.

4. A generator according to one of claims 1 and 2, characterized in that said chalcogen is chosen among the alkali, alkali-earth or ammonium chalcogenides.

5. An electrochemical generator including a negative electrode (1) comprising an alkali or alkali-earth metal dissolved in liquid ammonia, an electrolyte (3), a positive electrode (2) and a separator (4), characterized in that the positive electrode (2) comprises a suspension of at least one solid compound in ammonia, able to intercalate the metal of the negative electrode (1), said electrolyte (3) comprising a solution of a iodide of an alkali or alkali-earth metal.

6. A generator according to claim 5, characterized in that said solid compound is chosen among $Li_xNiPS_3$, $Li_xFeS_2$, $Li_xTiS_2$.

7. A generator according to one of claims 5 and 6, characterized in that the separator (4) is a non-selective membrane.

8. A generator according to one of claims 5 to 7, characterized in that the electrolyte (3) is disposed between said negative electrode (1) and the separator (4).

9. A generator according to one of claims 1 to 8, characterized in that said alkali metal is chosen among sodium, potassium and lithium, said alkali-earth metal preferably being calcium.

## Patentansprüche

1. Elektrochemischer Generator mit einer negativen Elektrode (1), die ein in flüssigem Ammoniak gelöstes Alkali- oder Erdalkalimetall aufweist, mit einem Elektrolyten (3), einer positiven Elektrode (2), die eine Lösung eines Chalcogens oder eines Chalcogenids in Ammoniak aufweist, und einem Separator (4), dadurch gekennzeichnet, daß der Separator (4) aus einer Kationenaustauschermembran besteht, wobei der Elektrolyt (3) eine Lösung eines Iodids eines Alkali- oder Erdalkalimetalls aufweist und sich innerhalb der Membran befindet.

2. Elektrochemischer Generator mit einer negativen Elektrode (1), die ein in flüssigem Ammoniak gelöstes Alkali- oder Erdalkalimetall aufweist, mit einem Elektrolyten (3), einer positiven Elektrode (2), die eine Lösung eines Chalcogens oder eines Chalcogenids in Ammoniak aufweist, und einem Separator (4), dadurch gekennzeichnet, daß der Seperator (4) aus einer Kationenaustauschermembran besteht, wobei der Elektrolyt (3) eine Lösung eines Iodids eines Alkali- oder Erdalkalimetalls aufweist und zwischen der negativen Elektrode (1) und dem Separator (3) angeordnet ist.

3. Generator nach einem der Ansprüche 1 und 2, dadurch gekennzeichnet, daß das chalcogen Schwefel ist.

4. Generator nach einem der Ansprüche 1 und 2, dadurch gekennzeichnet, daß das Chalcogen aus den Alkali-, Erdalkali- oder Ammonium-Chalcogeniden ausgewählt wird.

5. Elektrochemischer Generator mit einer negativen Elektrode (1), die ein in flüssigem Ammoniak gelöstes Alkali- oder Erdalkalimetall aufweist, mit einem Elektrolyten (3), einer positiven Elektrode (2) und einem Separator (4), dadurch gekennzeichnet, daß die positive Elektrode (2) eine Suspension von mindestens einer festen Verbindung in Ammoniak aufweist, die das Metall der negativen Elektrode (1) einschalten kann, wobei der Elektrolyt (3) eine Lösung eines Iodids eines Alkali- oder Erdalkalimetalls aufweist.

6. Generator nach Anspruch 5, dadurch gekennzeichnet, daß die feste Verbindung ausgewählt wird aus $Li_xNiPS_3$, $Li_xFeS_2$, $Li_xTiS_2$.

7. Generator nach einem der Ansprüche 5 und 6, dadurch gekennzeichnet, daß der Separator (4) eine nicht-selektive Membran ist.

8. Generator nach einem der Ansprüche 5 bis 7, dadurch gekennzeichnet, daß der Elektrolyt (3) sich zwischen der negativen Elektrode (1) und dem Separator (4) befindet.

9. Generator nach einem der Ansprüche 1 bis 8, dadurch gekennzeichnet, daß das Alkalimetall ausgewählt wird aus Natrium, Kalium und Lithium, wobei das Erdalkalimetall vorzugsweise Calcium ist.

# FIG.1

# FIG. 2

# FIG. 3

# FIG.4

# FIG. 5

## FIG.6

## FIG.7

# FIG.8

0 053 785